# EUROPÄISCHE PATENTSCHRIFT

(11) **EP 3 595 918 B1**
(45) Veröffentlichungstag und Bekanntmachung des Hinweises auf die Patenterteilung: **07.04.2021**
(21) Anmeldenummer: 18704894.7
(22) Anmeldetag: 29.01.2018
(51) Int. Cl.: B60G 7/00

(54) **FAHRWERKSKOMPONENTE FÜR EIN KRAFTFAHRZEUG UND VERFAHREN ZUM HERSTELLEN EINER FAHRWERKSKOMPONENTE**
CHASSIS COMPONENT FOR A MOTOR VEHICLE, AND METHOD FOR PRODUCING A CHASSIS COMPONENT
COMPOSANT DE CHÂSSIS POUR UN VÉHICULE AUTOMOBILE ET PROCÉDÉ DE FABRICATION D'UN COMPOSANT DE CHÂSSIS

(30) Priorität: 17.03.2017 DE 102017204464
(43) Veröffentlichungstag der Anmeldung: 22.01.2020
(73) Patentinhaber: Bayerische Motoren Werke Aktiengesellschaft, 80809 München (DE)
(72) Erfinder: JÄGER, Elmar, 80935 München (DE); KECK, Rüdiger, 82041 Oberhaching (DE); ENGELHARDT, Philipp, 84036 Landshut (DE); KONRAD, Oleg, 84030 Ergolding (DE); BIERBAUMER, Andreas, 83134 Prutting (DE)
(86) Internationale Anmeldenummer: PCT/EP2018/052067
(87) Internationale Veröffentlichungsnummer: WO 2018/166691

(56) Entgegenhaltungen:
- WO-A1-2014/019787
- DE-A1- 10 153 799
- DE-A1-102011 086 890
- DE-A1-102013 007 284
- DE-A1-102013 107 676
- US-A1- 2004 045 762
- Frank Lutter: "Organoblech-Prozesse komplett simulierbar", MaschinenMarkt, 24. Juli 2012 (2012-07-24), XP055467829, Gefunden im Internet: URL:https://www.maschinenmarkt.vogel.de/or ganoblech-prozesse-komplett-simulierbar-a- 372184/ [gefunden am 2018-04-17]

## Beschreibung

Die Erfindung betrifft eine Fahrwerkskomponente für ein Kraftfahrzeug. Außerdem betrifft die Erfindung ein Verfahren zum Herstellen einer derartigen Fahrwerkskomponente.

Aus der DE 10 2008 046 991 A1 ist ein lasttragendes Faserverbundstrukturbauteil bekannt, im Wesentlichen bestehend aus passgenau ineinandergreifenden, zwischen sich einen Hohlraum bildenden Einzelelementen aus Preformlingen aus geschichteten Faserhalbzeugen, wobei das Strukturbauteil eine komplexe, verzweigte Geometrie besitzt. Die Faserhalbzeuge basieren auf Kohlenstofffasern, Glasfasern, Multifasern, Aramidfasern und/oder Naturfasern. Die Fasern sind unidirektional, gekreuzt und/oder multiaxial im Faserhalbzeug angeordnet. Die Einzelelemente weisen ein U-Profil, einen monolithischen Rechtecksquerschnitt und ein I-Profil auf. In einem hinteren Abschnitt unterer Einzelelemente mit U-Profil sind Einleger in das Profil eingebracht, die einen Übergang von einer Hohlkastenstruktur zu einem monolithischen Lasteinleitungsbereich in einem hinteren Teil dienen. Ferner sind Deckel- und Stegeinsätze zur Versteifung der verzweigten Hohlkastenstruktur eingesetzt.

Außerdem ist aus der DE 10 2008 046 991 A1 ein Verfahren bekannt zur integralen Herstellung eines lasttragenden, dickwandigen Faserverbundstrukturbauteils mit komplexer, verzweigter Geometrie in Hohlkastenbauweise durch Ausbilden von Einzelelementen des herzustellenden Strukturbauteils aus Preformlingen durch schichtweises Ablegen von Faserhalbzeugen auf der Geometrie des Strukturbauteils angepassten Preformwerkzeugen und Ausformen, derart, dass die Einzelelemente in ihrer Längserstreckung von drei Wänden begrenzt sind, die Einzelelemente monolithisch ausgebildet sind und die Einzelelemente ein I-Profil aufweisen, Bearbeitung der Einzelelemente zu deren passgenauem Ineinanderbringen, Ineinanderbringen der Einzelelemente in ein Harzinjektionswerkzeug, derart, dass zwischen den Einzelelementen Hohlräume gebildet werden, wobei in die Hohlräume entfernbare Stützkerne eingefügt werden, Schließen des Harzinjektionswerkzeugs und Injizieren und Aushärten eines Harzsystems unter Druck und erhöhter Temperatur zur Ausbildung des Faserverbundstrukturbauteils.

Aus der DE 10 2011 085 029 A1 ist ein Stabilisator oder Stabilenker in Faserverbundbauweise bekannt, mit einteiligem Aufbau ohne Faserunterbrechung, wobei die Querschnittgeometrie, die Wandstärke sowie der Faserverlauf in axialer und radialer Richtung derart variieren, dass die aus dem zur Verfügung stehenden Bauraum und den zu erwartenden Belastungen resultierenden Anforderungen erfüllt sind. Der hauptsächlich torsionsbeanspruchte Mittelteil des Stabilisators weist einen weitestgehend kreisförmigen Querschnitt mit in axialer Richtung variierendem, der Belastung sowie der Position von Lasteinleitungselementen angepassten Durchmesser und Wandstärkenverlauf auf, die hauptsächlich biegebeanspruchten Endstücke des Stabilisators eine der Biegebelastung sowie der Anbindung der Radaufhängung und die Übergangsbereiche weisen eine der kombinierten Torsions- und Biegebelastung angepasste Querschnittform und Wandstärke auf. Zur Anpassung der Wandstärke an definierten Belastungsbereichen, insbesondere in Biegebereichen und an Lasteinleitungselementen, sind textile Einleger eingebracht und/oder ist die Faserablage verstärkt bzw. vermindert.

Außerdem ist aus der der DE 10 2011 085 029 A1 ein Verfahren zur Herstellung eines derartigen Stabilisators oder Stabilenkers bekannt, umfassend folgende Schritte: auf einem geraden, elastischen sowie konturierten Kern durch die Ablage von Fasern, bevorzugt mittels Flechten oder Wickeln, ein Vorformling (Preform) erzeugt wird, dieser gemeinsam mit dem Kern in eine gebogene Geometrie umgeformt wird, in ein der gebogenen Geometrie entsprechend geformtes, geschlossenes Ur-/Umformwerkzeug eingelegt wird, in diesem die Fasern mit einem Matrixwerkstoff zu Laminat verbunden werden, dieses durch Einfüllung eines expandierenden Materials in den Kern in seine Endkontur verpresst wird und anschließend aus dem Ur-/Umformwerkzeug entnommen wird.

Aus der DE 10 2013 002 585 A1 ist ein Fahrwerkslenker für ein Kraftfahrzeug bekannt umfassend mindestens zwei Lageraufnahmen für verschiedene Lagerungselemente und ein dazwischen angeordnetes Verbindungsbauteil aus faserverstärktem Kunststoff, das mit Klebeverbindungen an entsprechenden Wellenabsätzen der Lageraufnahmen befestigt ist, bei dem ein Innenraum des Verbindungsbauteiles durch die beiden Klebeverbindungen zwischen den Lageraufnahmen und dem Verbindungsbauteil luftdicht abgeschlossen ist, und dass in dem Innenraum ein Drucksensor zur Erfassung des Innendrucks in dem Innenraum angeordnet ist, der ein von dem Innendruck abhängiges Signal an eine Steuereinheit abgibt.

Außerdem ist aus der DE 10 2013 002 585 A1 ein Verfahren bekannt zur Herstellung eines derartigen Fahrwerkslenkers umfassend: Bereitstellen von zwei Lageraufnahmen für verschiedene Lagerungselemente, Bereitstellen von einem Verbindungsbauteil aus faserverstärktem Kunststoff, Befestigen eines Drucksensors an einem Wellenabsatz von einem der Lageraufnahmen oder an dem Verbindungsbauteil in dessen Innenraum zur Erfassung des Innendrucks in dem Innenraum, Aufbringen eines Klebemittels an den Wellenabsätzen der Lageraufnahmen, Einlegen und Ausrichten der Lageraufnahmen und des Verbindungsbauteiles in einer Fertigungsvorrichtung, Ineinander Verbringen der Lageraufnahmen und des Verbindungsbauteiles durch die Fertigungsvorrichtung und Erzeugen von Klebeverbindungen zwischen dem Verbindungsbauteil und den Lageraufnamen, wodurch der Innenraum des Verbindungsbauteiles durch die beiden Klebeverbindungen zwischen den Lageraufnahmen und dem Verbindungsbauteil luftdicht abgeschlossen wird, und Überwachen des Innendrucks und Übertragen eines vom Innendruck abhängigen Signals in bzw. an einer Steuereinheit.

Das Dokument US 2004/0045762 A1 betrifft eine gattungsgemäße Halterung einer aus Verbundwerkstoffen hergestellten Kraftverbindungsstrebe für ein Fahrgestell eines Kraftfahrzeugs. Die Halterung aus dem Dokument US 2004/0045762 A1 wird vorzugsweise in Verbindung mit Achsstreben oder Querlenkern des Fahrgestells verwendet. Dem Dokument US 2004/0045762 A1 zufolge weist die Kraftanschlussstrebe einen Grundkörper mit einem Metalleinsatz auf. Eine Kunststoffstruktur bildet eine Befestigung für eine Hülse im Bereich einer Montagehalterung. Die Montagehalterung wird durch eine Hülse gebildet wird. Die Kunststoffstruktur ist als Extrusionsbeschichtung des Metalleinsatz und der Hülse hergestellt. Das Dokument US 2004/0045762 A1 offenbart eine Ausführung mit einem H-förmigen Kunststoffprofil mit einem U-förmigen Metalleinsatz. An einem linken oberen und unteren Schenkel des H-Profils sind Öffnungen und zwei in die Öffnungen eingeführte Hülsen vorgesehen, die sich axial gegenüberliegen. Die obere und die untere Hülse bilden zusammenwirkend eine einzige Montagehalterung. Auf die Mitteilung nach Regel 161 (1) und 162 EPÜ

Aus Dokument WO 2014/019787 A1 ist eine Strebe, insbesondere für ein Fahrwerk eines Kraftfahrzeugs, bekannt, die als Kräfte übertragende Verbindung zwischen zwei Lagerstellen dient, wobei die Strebe zumindest teilweise mit Organoblech ausgeführt ist, wobei das Organoblech einen Strukturkörper bildet, welcher durch an- oder eingespritzten Kunststoff verstärkt oder ergänzt ist. Das Dokument WO 2014/019787 A1 offenbart Ausführungen der Strebe mit einem eingepressten ersten Lager und ohne Lager.

Aus dem Dokument DE 101 53 799 A1 ist eine Kraftverbindungsstrebe eines Fahrwerks eines Personen- oder Nutzkraftwagens bekannt zur Verbindung zwischen einem Chassis und einem Radträger, vorzugsweise Achsstrebe oder Fahrwerkslenker, mit einem länglichen Grundkörper und mindestens zwei endständigen Lageraufnahmen zur Ein- und Ausleitung von Kräften, bei der der Grundkörper einen Verbund mindestens einer flachen Metalleinlage und einer die Restkontur bildenden Kunststoffstruktur aufweist, welche durch zumindest teilweises Umspritzen der Metalleinlage gebildet ist.

Das Dokument DE 10 2013 007 284 A1 betrifft eine Verbindungsstrebe, die an einem Fahrzeug als Fahrwerkbauteil, insbesondere Lenker, als Stabilisator, insbesondere Wankstabilisator, als Stütze, insbesondere Pendelstütze zur Abstützung eines Antriebsaggregats oder dgl. mehr verwendbar ist. Dem Dokument DE 10 2013 007 284 A1 zufolge ist die Grundstruktur der Verbindungsstrebe durch eine Mehrzahl von Prepregs gebildet, die zu ersten und zweiten Prepreg-Windungslagen geformt sind. Die Verbindungsstrebe weist einen langgestreckten Abschnitt respektive Stangenabschnitt und beidenends desselben je ein Lagerauge auf. Die Lageraugen sind jeweils durch mehrere umlaufende erste Prepreg-Windungslagen gebildet. Des Weiteren sind mehrere von einem zum anderen Lagerauge über einen Teilkreis derselben geführte zweite Prepreg-Windungslagen vorgesehen, die zur Ausbildung des Stangenabschnitts besagte Lageraugen untereinander verbinden. In einem in Längsrichtung der Verbindungsstrebe gesehen mittleren Bereich des Stangenabschnitts gegenüberliegend verlaufende Windungsabschnitte der zweiten Prepreg-Windungslagen sind mittelbar über Prepreg-Zwischenlagen aufeinander gelegt und streben dann zur Kraftumleitung und Vermeidung von Spannungsspitzen zu den Lageraugen hin keilförmig auseinander, wodurch jeweils ein Entlastungsloch ausgebildet wird, um dann über einen Teilkreis des Lagerauges um dasselbe herumgeführt zu werden. Gemäß einem Ausführungsbeispiel bestehen die Prepreg-Windungslagen und die Prepreg-Zwischenlagen aus einer unidirektionalen Schicht eines Faser-Kunststoffverbundes, in welcher alle Fasern in eine einzige Richtung in Umlaufrichtung der Prepreg-Windungslagen bzw. bezüglich eines überwiegenden Teils der Prepreg-Zwischenlagen in Längsrichtung der Verbindungsstrebe orientiert sind.

Der Erfindung liegt die Aufgabe zugrunde, eine eingangs genannte Fahrwerkskomponente baulich und/oder funktional zu verbessern. Außerdem liegt der Erfindung die Aufgabe zugrunde, ein eingangs genanntes Verfahren zu verbessern.

Die Aufgabe wird gelöst mit einer Fahrwerkskomponente mit den Merkmalen des Anspruchs 1. Außerdem wird die Aufgabe gelöst mit einem Verfahren mit den Merkmalen des Anspruchs 9. Vorteilhafte Ausführungen und Weiterbildungen sind Gegenstand der Unteransprüche.

Das Kraftfahrzeug kann ein Kraftrad sein. Das Kraftfahrzeug kann ein PKW sein. Die Fahrwerkskomponente kann eine Hinterradschwinge sein. Die Fahrwerkskomponente kann ein Querlenker sein. Die Fahrwerkskomponente kann eine stangenartige Form aufweisen. Die Fahrwerkskomponente kann eine gabelartige Form aufweisen. Die Fahrwerkskomponente kann ein erstes Komponentenende und ein dem ersten Komponentenende gegenüberliegendes zweites Komponentenende aufweisen. Das erste Komponentenende und/oder das zweite Komponentenende können/kann eine fortsatzartige Form aufweisen. Das erste Komponentenende und/oder das zweite Komponentenende können/kann eine gabelartige Form aufweisen.

Das Kernmodul kann eine gesondert herstellbare Baugruppe bilden. Das Kernmodul kann skelettartig ausgeführt sein. Das Kernmodul kann flexibel sein.

Das wenigstens eine erste Lastleitungselement und/oder das wenigstens eine zweite Lastleitungselement können/kann einen Verbindungsabschnitt zur Verbindung mit dem Lastübertragungselement aufweisen. Der Verbindungsabschnitt kann eine Oberfläche mit einer erhöhten Rauheit aufweisen. Der Verbindungsabschnitt kann eine gerändelte Oberfläche aufweisen. Der Verbindungsabschnitt kann wenigstens einen Hinterschnitt aufweisen. Das wenigstens eine erste Lastleitungselement und/oder das wenigstens eine zweite Lastleitungselement können/kann einen Nabenabschnitt aufweisen. Der Nabenabschnitt kann zur Aufnahme eines Lagers dienen. Der Nabenabschnitt kann zur Aufnahme einer Achse oder Welle dienen.

Das wenigstens eine erste Lastleitungselement und/oder das wenigstens eine zweite Lastleitungselement können/kann eine quaderartige Form aufweisen. Das wenigstens eine erste Lastleitungselement und/oder das wenigstens eine zweite Lastleitungselement können/kann eine hülsenartige Form aufweisen.

Das wenigstens eine erste Lastleitungselement und/oder das wenigstens eine zweite Lastleitungselement können/kann aus einem Metall hergestellt sein. Das Metall kann eine Stahl- oder Aluminiumlegierung sein. Das wenigstens eine erste Lastleitungselement und/oder das wenigstens eine zweite Lastleitungselement können/kann zumindest abschnittsweise lackiert sein. Das wenigstens eine erste Lastleitungselement und/oder das wenigstens eine zweite Lastleitungselement können/kann zumindest abschnittsweise beschichtet sein. Das wenigstens eine erste Lastleitungselement und/oder das wenigstens eine zweite Lastleitungselement können/kann elektrophoretisch tauchlackiert sein.

Das wenigstens eine erste Lastleitungselement und/oder das wenigstens eine zweite Lastleitungselement können/kann zumindest einen weiteren Funktionsabschnitt aufweisen. Der wenigstens eine weitere Funktionsabschnitt kann zur Befestigung von Bauteilen an der Fahrwerkskomponente dienen.

Das wenigstens eine erste Lastleitungselement und/oder das wenigstens eine zweite Lastleitungselement können/kann an unterschiedlichen Komponentenenden angeordnet sein. Das wenigstens eine erste Lastleitungselement und/oder das wenigstens eine zweite Lastleitungselement können/kann an demselben Komponentenende angeordnet sein.

Das wenigstens eine Lastübertragungselement kann ein erstes Übertragungselementende und ein dem ersten Übertragungselementende gegenüberliegendes zweites Übertragungselementende aufweisen. Das erste Übertragungselementende kann mit dem wenigstens einen ersten Lastleitungselement lastübertragend verbunden sein. Das zweite Übertragungselementende kann mit dem wenigstens einen zweiten Lastleitungselement lastübertragend verbunden sein.

Das wenigstens eine Lastübertragungselement kann Fasern aufweisen. Die Fasern können organische Fasern, wie Aramidfasern, Kohlenstofffasern, Polyester-Fasern, Nylon-Fasern, Polyethylen-Fasern, Plexiglas-Fasern, und/oder anorganische Fasern, wie Basaltfasern, Borfasern, Glasfasern, Keramikfasern, Kieselsäurefasern, sein.

Das wenigstens eine Lastübertragungselement kann unidirektional angeordnete Endlosfasern aufweisen. Die unidirektional angeordneten Endlosfasern können mit einem Winkel von zumindest annähernd 0° zu einem Hauptlastrichtungsverlauf angeordnet sein. Die unidirektional angeordneten Endlosfasern können sich zwischen dem wenigstens einen ersten Lastleitungselement und dem wenigstens einen zweiten Lastleitungselement erstrecken. Das wenigstens eine Lastübertragungselement kann ein UD-Kohlenstofffaser-Band aufweisen.

Das wenigstens eine Lastübertragungselement kann bi- oder multidirektional angeordnete Endlosfasern aufweisen. Bidirektional angeordnete Endlosfasern können zumindest annähernd rechtwinklig zueinander angeordnet sein. Bidirektional angeordnete Endlosfasern können mit einem Winkel von zumindest annähernd +/-45° zu einem Hauptlastrichtungsverlauf angeordnet sein. Das wenigstens eine Lastübertragungselement kann eine verkleidungsartige Form aufweisen. Das wenigstens eine Lastübertragungselement kann eine plattenartige Form aufweisen. Das wenigstens eine Lastübertragungselement kann ein Organoblech aufweisen.

Die Fasern können in ein Matrixmaterial eingebettet sein. Das Matrixmaterial kann thermoplastisch sein. Das Matrixmaterial kann Polyamid, insbesondere PA 6 oder PA6.6, sein. Das Matrixmaterial kann Polypropylen sein Das Matrixmaterial kann duroplastisch sein.

Das wenigstens eine Lastübertragungselement kann ein Metall aufweisen. Das Metall kann eine Stahl- oder Aluminiumlegierung sein. Das wenigstens eine Lastübertragungselement kann ein Rundprofil, I-Profil oder T-Profil aufweisen. Das wenigstens eine Lastübertragungselement kann ein Hohlprofil aufweisen. Das wenigstens eine Lastübertragungselement kann vorgeformt sein. Das wenigstens eine Lastübertragungselement kann eine gebogene Form aufweisen.

Die Umspritzung kann einen fasergefüllten Kunststoff mit einem vorgegebenen Mindestanteil an Recycling- bzw. Sekundärmaterial aus Verschnittresten aufweisen. Die Umspritzung kann Kurz- und/oder Langfasern aufweisen. Die Fasern können organische Fasern, wie Aramidfasern, Kohlenstofffasern, Polyester-Fasern, Nylon-Fasern, Polyethylen-Fasern, Plexiglas-Fasern, und/oder anorganische Fasern, wie Basaltfasern, Borfasern, Glasfasern, Keramikfasern, Kieselsäurefasern, sein. Die Umspritzung kann einen thermoplastischen Kunststoff aufweisen. Die Umspritzung kann Polyamid, insbesondere PA6.6, aufweisen. Die Umspritzung bzw. Umpressung kann einen duroplastischen Kunststoff aufweisen. Die Umspritzung kann Ausnehmungen aufweisen. Die Umspritzung kann Versteifungsrippen aufweisen.

Die Fahrwerkskomponente kann wenigstens ein außenseitig an der Umspritzung angeordnetes Versteifungselement aufweist. Das wenigstens eine Versteifungselement kann bi- oder multidirektional angeordnete Endlosfasern aufweisen. Die Fasern können organische Fasern, wie Aramidfasern, Kohlenstofffasern, Polyester-Fasern, Nylon-Fasern, Polyethylen-Fasern, Plexiglas-Fasern, und/oder anorganische Fasern, wie Basaltfasern, Borfasern, Glasfasern, Keramikfasern, Kieselsäurefasern, sein. Bidirektional angeordnete Endlosfasern können zumindest annähernd rechtwinklig zueinander angeordnet sein. Bidirektional angeordnete Endlosfasern können mit einem Winkel von zumindest annähernd +/-45° zu einem Hauptlastrichtungsverlauf angeordnet sein. Das wenigstens eine Versteifungselement kann eine verkleidungsartige Form aufweisen. Das wenigstens eine Versteifungselement kann eine plattenartige Form aufweisen. Das wenigstens eine Versteifungselement kann ein Organoblech aufweisen.

Zur Herstellung der Fahrwerkskomponente kann zunächst ein kritischer Lastpfad identifiziert werden. Der kritische Lastpfad kann isoliert werden. Das wenigstens eine Lastübertragungselement kann entlang des kritischen Lastpfads modelliert werden. Ein Umspritzen des Kernmoduls kann simuliert werden. Eine Angussanordnung kann bestimmt werden. Die Identifizierung, die Isolierung, die Modellierung, das Umspritzen und/oder die Angussanordnung können/kann mithilfe eines Computerprogramms erfolgen/bestimmt werden.

Das wenigstens eine erste Lastleitungselement, das wenigstens eine Lastübertragungselement und das wenigstens eine zweite Lastleitungselement können miteinander zur Herstellung des Kernmoduls kraftschlüssig, formschlüssig und/oder stoffschlüssig gefügt werden. Beim nachfolgenden Umspritzen des Kernmoduls kann mithilfe der Umspritzung eine weitere belastungsfähige Verbindung zwischen dem wenigstens einen ersten Lastleitungselement, dem wenigstens einen Lastübertragungselement und dem wenigstens einen zweiten Lastleitungselement erfolgen. Das wenigstens eine Lastübertragungselement kann vollständig umspritzt werden. Das wenigstens eine Lastübertragungselement kann teilweise umspritzt werden, um ein Halten des Lastübertragungselements während des Umspritzens zu ermöglichen.

Das wenigstens eine Lastübertragungselement und/oder das wenigstens eine Versteifungselement können/kann aus einem vorimprägnierten Faserhalbzeug hergestellt werden. Das wenigstens eine Lastübertragungselement kann aus einem trockenen Faserhalbzeug hergestellt und beim Umspritzen infiltriert werden.

Nachfolgend können die Umspritzung und das wenigstens eine Versteifungselement gefügt werden. Das wenigstens eine Versteifungselement kann aus einem vorimprägnierten Faserhalbzeug hergestellt und beim Umspritzen infiltriert werden. Das wenigstens eine Versteifungselement kann zunächst gesondert hergestellt und nachfolgend mit der Umspritzung gefügt werden. Die Umspritzung und das wenigstens eine Versteifungselement können miteinander kraftschlüssig, formschlüssig und/oder stoffschlüssig gefügt werden. Die Umspritzung und das wenigstens eine Versteifungselement können miteinander verschweißt werden. Die Umspritzung und das wenigstens eine Versteifungselement können miteinander in einem umlaufenden Randbereich verschweißt werden. Die Umspritzung und das wenigstens eine Versteifungselement können miteinander an Versteifungsrippen des wenigstens einen Versteifungselements verschweißt werden.

Mit der Erfindung kann eine CFRTP-Bauweise dem Fahrwerksbereich zugänglich gemacht werden. Eine CFRTP-Bauweise ist eine Bauweise mit karbonfaserverstärkten thermoplastischen Kunststoffen (Englisch: carbon fiber reinforced thermoplastic, CFRTP). Im Fahrzeugbau etablierte Kunststoffe sind einsetzbar. Ein Gewicht wird reduziert. Ein Aufwand, wie Kostenaufwand, wird reduziert. Eine Nachhaltigkeit wird erhöht.

Nachfolgend werden Ausführungsbeispiele der Erfindung unter Bezugnahme auf Figuren näher beschrieben. Aus dieser Beschreibung ergeben sich weitere Merkmale und Vorteile.

Es zeigen schematisch und beispielhaft:
- Fig. 1: Lastleitungelemente eines Kernmoduls einer Motorradhinterradschwinge,
- Fig. 2: Lastleitungelemente und Lastübertragungselemente eines Kernmoduls einer Motorradhinterradschwinge,
- Fig. 3: ein Kernmodul einer Motorradhinterradschwinge mit Lastleitungelementen und Lastübertragungselementen,
- Fig. 4: eine Motorradhinterradschwinge mit einem Kernmodul und einer Umspritzung,
- Fig. 5: eine Motorradhinterradschwinge mit einem Kernmodul, einer Umspritzung und Versteifungselementen und
- Fig. 6: eine Motorradhinterradschwinge mit einem Kernmodul, einer Umspritzung und Versteifungselementen.

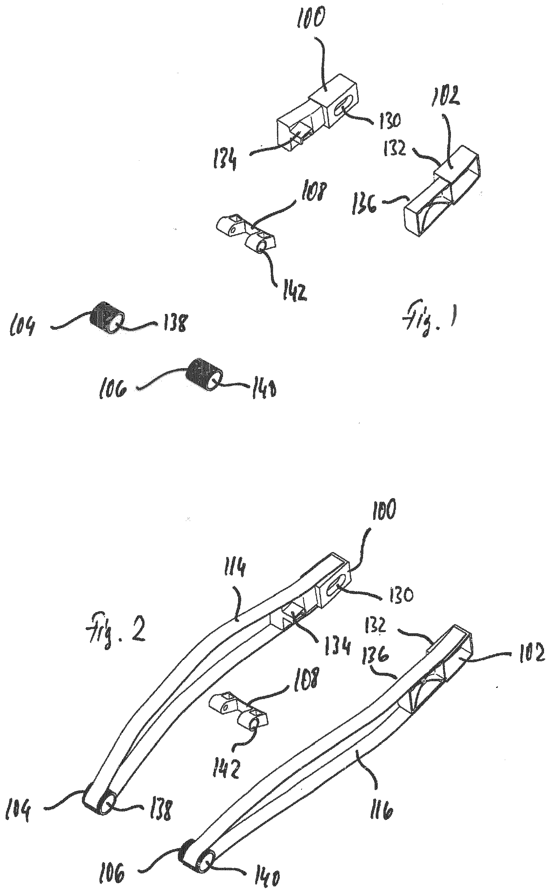

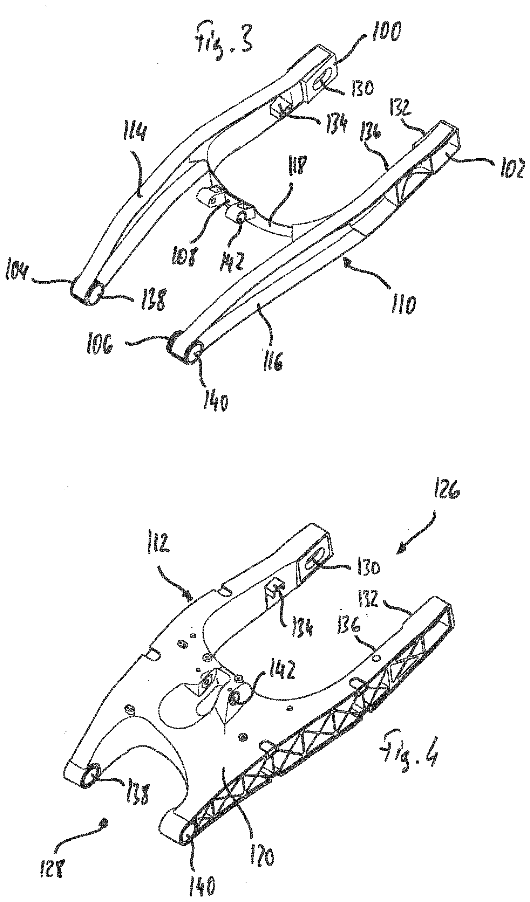

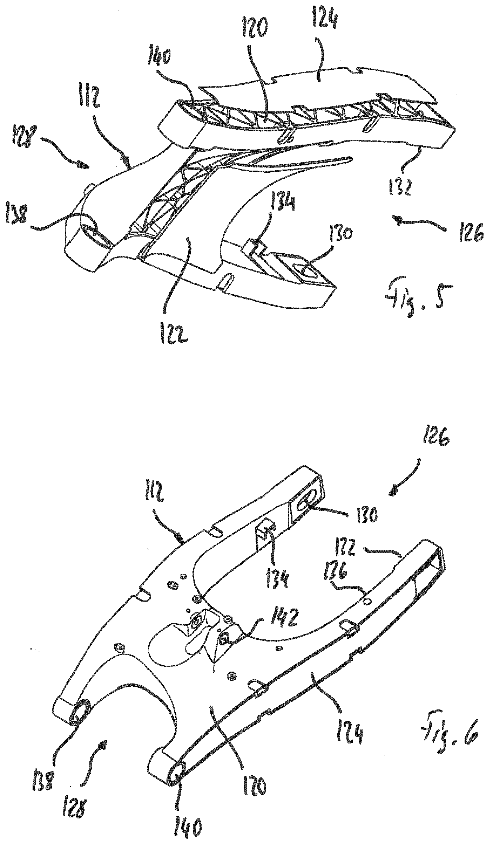

Fig. 1 zeigt Lastleitungelemente 100, 102, 104, 106, 108 eines Kernmoduls 110 einer Motorradhinterradschwinge 112. Fig. 2 zeigt Lastleitungelemente 100, 102, 104, 106, 108 und Lastübertragungselemente 114, 116 eines Kernmoduls 110 einer Motorradhinterradschwinge 112. Fig. 3 zeigt das Kernmodul 110 mit den Lastleitungelementen 100, 102, 104, 106, 108 und Lastübertragungselementen 114, 116, 118. Fig. 4 zeigt die Motorradhinterradschwinge 112 mit dem Kernmodul 110 und einer Umspritzung 120. Fig. 5 und Fig. 6 zeigen die Motorradhinterradschwinge 112 mit dem Kernmodul 110, der Umspritzung 120 und Versteifungselementen 122, 124.

Vorliegend wird die Erfindung anhand einer der Motorradhinterradschwinge 112 erläutert. Die Erfindung kann jedoch auch für andere Fahrwerkskomponenten, beispielsweise einen PKW-Querlenker, genutzt werden.

Die Motorradhinterradschwinge 112 weist das Kernmodul 110 mit den Lastleitungelementen 100, 102, 104, 106, 108 und den Lastübertragungselementen 114, 116, 118 auf. Die Motorradhinterradschwinge 112 weist zwei einander gegenüberliegende Schwingenenden 126, 128 auf. Die Schwingenenden 126, 128 weisen jeweils eine gabelartige Form auf.

Die Lastleitungelemente 100, 102 sind an dem Schwingenende 126 angeordnet. Die Lastleitungelemente 100, 102 dienen zur Aufnahme eines drehbaren Fahrzeugrads. Die Lastleitungelemente 100, 102 weisen jeweils außenseitig einen Verbindungsabschnitt zur Verbindung mit einem Lastübertragungselement 114, 116 und einen langlochförmigen Nabenabschnitt 130, 132 zur Aufnahme eines Lagers bzw. einer Achse oder Welle auf. Die Lastleitungelemente 100, 102 weisen jeweils eine quaderartige Form auf. Die Lastleitungelemente 100, 102 weisen jeweils einen weiteren Funktionsabschnitt 134, 136 zur Befestigung von Bauteilen, wie einer Bremse, auf. Die Lastleitungelemente 100, 102 sind jeweils aus einer Stahl- oder Aluminiumlegierung hergestellt, in Leichtbauweise mit Ausnehmungen und Versteifungsrippen ausgeführt und kathodentauchlackiert.

Die Lastleitungelemente 104, 106 sind an dem Schwingenende 128 angeordnet. Die Lastleitungelemente 104, 106 dienen zur schwenkbaren Verbindung der Motorradhinterradschwinge 112 mit einem Fahrzeugrahmen. Die Lastleitungelemente 104, 106 weisen jeweils außenseitig einen Verbindungsabschnitt zur Verbindung mit einem Lastübertragungselement 114, 116 und einen Nabenabschnitt 138, 140 zur Aufnahme eines Lagers bzw. einer Achse oder Welle auf. Die Lastleitungelemente 104, 106 weisen jeweils eine hülsenartige Form auf. Die Lastleitungelemente 104, 106 sind jeweils aus einer Stahl- oder Aluminiumlegierung hergestellt und kathodentauchlackiert.

Das Lastleitungelement 108 ist an der Motorradhinterradschwinge 112 in etwa mittig angeordnet. Das Lastleitungelement 108 dient zur schwenkbaren Aufnahme eines Federbeins. Das Lastleitungelement 108 weist außenseitig einen Verbindungsabschnitt zur Verbindung mit dem Lastübertragungselement 118 und Nabenabschnitte, wie 142, zur Aufnahme eines Lagers bzw. einer Achse oder Welle auf. Das Lastleitungelement 108 ist aus einer Stahl- oder Aluminiumlegierung hergestellt und kathodentauchlackiert.

Das Lastübertragungselement 114 weist zwei Übertragungselementenden und einen einem strukturellen Lastpfad folgenden mehrfach leicht geschwungenen Verlauf auf. Die Übertragungselementenden des Lastübertragungselements 114 sind mit den Lastleitungelementen 100, 104 lastübertragend verbunden. Das Lastübertragungselement 116 weist zwei Übertragungselementende und einen einem strukturellen Lastpfad folgenden mehrfach leicht geschwungenen Verlauf auf. Die Übertragungselementenden des Lastübertragungselements 116 sind mit den Lastleitungelementen 102, 106 lastübertragend verbunden.

Die Lastübertragungselemente 114, 116 weisen jeweils ein UD-Kohlenstofffaser-Band mit unidirektional angeordnete Endlosfasern aus Kohlenstoff auf, die mit einem Winkel von etwa 0° zu einem Hauptlastrichtungsverlauf angeordnet sind und sich zwischen den Lastleitungselementen 100, 104 bzw. den Lastleitungselementen 102, 106 erstrecken. Die Kohlenstofffasern sind in einer Kunststoffmatrix aus PA6 oder PA6.6 eingebettet. Die Lastübertragungselemente 114, 116 sind somit aus einem Faser-Kunststoff-Verbund mit unidirektionaler Faserrichtung hergestellt.

Das Lastübertragungselement 118 weist ein Organoblech mit bidirektional angeordneten Endlosfasern aus Kohlenstoff auf, die zueinander in etwa rechtwinklig und jeweils mit einem Winkel von etwa +/-45° zu einem Hauptlastrichtungsverlauf angeordnet sind. Das Lastübertragungselement 118 weist eine U-artige Form auf und erstreckt sich zwischen den Lastleitungselementen 100, 102 und dem Lastleitungselement 108. Die Kohlenstofffasern sind in einer Kunststoffmatrix aus PA6 oder PA6.6 eingebettet. Das Lastübertragungselement 118 ist somit aus einem Faser-Kunststoff-Verbund mit bidirektionaler Faserrichtung hergestellt.

Das Kernmodul 110 ist mit einem fasergefüllten Kunststoff umspritzt. Die Umspritzung 120 weist einen vorgegebenen Mindestanteil an Recyclingmaterial auf. Die Umspritzung 120 weist multidirektional angeordnete Kurz- und/oder Langfasern aus Kohlenstoff auf. Die Umspritzung 120 umschließt das Kernmodul 110 weitgehend und bestimmt damit maßgeblich die Geometrie der Motorradhinterradschwinge 112. Die Nabenabschnitte 130, 132, die Funktionsabschnitte 134, 136, die Nabenabschnitte 138, 140 und die Nabenabschnitte 142 bleiben zugänglich. Ebenso bleiben Abschnitte der Lastübertragungselemente 114, 116 zunächst frei, um ein Halten während des Umspritzens zu ermöglichen. Die Umspritzung 120 ist in Leichtbauweise mit Ausnehmungen und Versteifungsrippen ausgeführt.

Die Versteifungselemente 122, 124 sind außenseitig an der Umspritzung 120 angeordnet. Die Versteifungselemente 122, 124 sind verkleidungsartig ausgeführt. Die Versteifungselemente 122, 124 sind mit der Umspritzung 120 verschweißt. Das Versteifungselement 122 ist mittig an einer unteren Außenseite der Motorradhinterradschwinge 112 angeordnet. Zwei Versteifungselemente, wie 124, sind seitlich an der Motorradhinterradschwinge 112 angeordnet.

Die Versteifungselemente 122, 124 weisen jeweils ein Organoblech mit bidirektional angeordneten Endlosfasern aus Kohlenstoff auf, die zueinander in etwa rechtwinklig und jeweils mit einem Winkel von etwa +/-45° zu einem Hauptlastrichtungsverlauf angeordnet sind. Die Kohlenstofffasern sind in einer Kunststoffmatrix aus PA6.6 eingebettet. Die Versteifungselemente 122, 124 sind somit aus einem Faser-Kunststoff-Verbund mit bidirektionaler Faserrichtung hergestellt.

Zur Herstellung der Motorradhinterradschwinge 112 wird zunächst zwischen den Lastleitungselementen 100, 102, 104, 106, 108 ein kritischer Lastpfad identifiziert, der kritische Lastpfad wird isoliert und die Lastübertragungselemente 114, 116, 118 werden entlang des kritischen Lastpfads modelliert. Daraufhin wird zunächst das Kernmodul 110 durch Fügen der Lastleitungselemente 100, 102, 104, 106, 108 und der Lastübertragungselemente 114, 116, 118 hergestellt. Nachfolgend wird das Kernmodul 110 umspritzt. Die Kunststoffmatrix der Lastübertragungselemente 114, 116, 118 und die Umspritzung 120 können unterschiedliche Schmelztemperaturen aufweisen. Beim Umspritzen schmelzen die Lastübertragungselemente 114, 116, 118 oberflächlich auf und es entsteht eine stoffschlüssige Verbindung, sodass Phasentrennungen und/oder Bindenähte reduziert oder vermieden werden können. Abschließend werden die Versteifungselemente 122, 124 thermoplastisch verschweißt bzw. verklebt.

### Bezugszeichen

- 100: Lastleitungelement
- 102: Lastleitungelement
- 104: Lastleitungelement
- 106: Lastleitungelement
- 108: Lastleitungelement
- 110: Kernmodul
- 112: Fahrwerkskomponente, Motorradhinterradschwinge
- 114: Lastübertragungselement
- 116: Lastübertragungselement
- 118: Lastübertragungselement
- 120: Umspritzung
- 122: Versteifungselement
- 124: Versteifungselement
- 126: Schwingenende
- 128: Schwingenende
- 130: Nabenabschnitt
- 132: Nabenabschnitt
- 134: Funktionsabschnitt
- 136: Funktionsabschnitt
- 138: Nabenabschnitt
- 140: Nabenabschnitt
- 142: Nabenabschnitt

## Patentansprüche

1. Fahrwerkskomponente (112) für ein Kraftfahrzeug, die Fahrwerkskomponente (112) aufweisend ein Kernmodul (110) mit wenigstens einem ersten Lastleitungselement (100, 102), wenigstens einem zweiten Lastleitungselement (104, 106) und wenigstens einem das wenigstens eine erste Lastleitungselement (100, 102) und das wenigstens eine zweite Lastleitungselement (104, 106) verbindenden Lastübertragungselement (114, 116, 118) und eine Umspritzung (120), **dadurch gekennzeichnet, dass** wenigstens ein Lastübertragungselement (114, 116) unidirektional angeordnete Endlosfasern und wenigstens ein Lastübertragungselement (118) bi- oder multidirektional angeordnete Endlosfasern aufweist.

2. Fahrwerkskomponente (112) nach Anspruch 1, **dadurch gekennzeichnet, dass** das wenigstens eine Lastübertragungselement (114, 116) ein Unidirektional-Kohlenstofffaser-Band aufweist.

3. Fahrwerkskomponente (112) nach wenigstens einem der vorhergehenden Ansprüche, **dadurch gekennzeichnet, dass** das wenigstens eine Lastübertragungselement (118) ein Organoblech aufweist.

4. Fahrwerkskomponente nach wenigstens einem der vorhergehenden Ansprüche, **dadurch gekennzeichnet, dass** das wenigstens eine Lastübertragungselement ein Metall aufweist.

5. Fahrwerkskomponente (112) nach wenigstens einem der vorhergehenden Ansprüche, **dadurch gekennzeichnet, dass** die Umspritzung (120) einen fasergefüllten Kunststoff mit einem vorgegebenen Mindestanteil an Recyclingmaterial aufweist.

6. Fahrwerkskomponente (112) nach wenigstens einem der vorhergehenden Ansprüche, **dadurch gekennzeichnet, dass** die Fahrwerkskomponente (112) wenigstens ein außenseitig an der Umspritzung (120) angeordnetes Versteifungselement (122, 124) aufweist.
Auf die Mitteilung nach Regel 161 (1) und 162 EPÜ

7. Fahrwerkskomponente (112) nach wenigstens einem der vorhergehenden Ansprüche, **dadurch gekennzeichnet, dass** das wenigstens eine Versteifungselement (122, 124) bi- oder multidirektional angeordnete Endlosfasern aufweist.

8. Fahrwerkskomponente (112) nach wenigstens einem der vorhergehenden Ansprüche, **dadurch gekennzeichnet, dass** das wenigstens eine Versteifungselement (122, 124) ein Organoblech aufweist.

9. Verfahren zum Herstellen einer Fahrwerkskomponente (112) nach wenigstens einem der vorhergehenden Ansprüche, **dadurch gekennzeichnet, dass** zunächst das Kernmodul (110) durch Fügen des wenigstens einen ersten Lastleitungselements (100, 102) und des wenigstens einen Lastübertragungselements (114, 116, 118) sowie des wenigstens einen Lastübertragungselements (114, 116, 118) und des wenigstens einen zweiten Lastleitungselements (104, 106) hergestellt und nachfolgend das Kernmodul (110) umspritzt wird.

10. Verfahren nach Anspruch 9, **dadurch gekennzeichnet, dass** nachfolgend die Umspritzung (120) und das wenigstens eine Versteifungselement (122, 124) gefügt werden.

## Claims

1. Chassis component (112) for a motor vehicle, the chassis component (112) having a core module (110) with at least one first load-conducting element (100, 102), at least one second load-conducting element (104, 106) and at least one load transfer element (114, 116, 118) connecting the at least one first load-conducting element (100, 102) and the at least one second load-conducting element (104, 106), and an overmoulding (120), **characterized in that** at least one load transfer element (114, 116) comprises unidirectionally arranged continuous fibres and at least one load transfer element (118) comprises bidirectionally or multidirectionally arranged continuous fibres.

2. Chassis component (112) according to Claim 1, **characterized in that** the at least one load transfer element (114, 116) comprises a unidirectional carbon fibre tape.

3. Chassis component (112) according to at least one of the preceding claims, **characterized in that** the at least one load transfer element (118) comprises an organosheet.

4. Chassis component according to at least one of the preceding claims, **characterized in that** the at least one load transfer element comprises a metal.

5. Chassis component (112) according to at least one of the preceding claims, **characterized in that** the overmoulding (120) comprises a fibre-filled plastic with a predetermined minimum proportion of recycled material.

6. Chassis component (112) according to at least one of the preceding claims, **characterized in that** the chassis component (112) has at least one reinforcing element (122, 124) arranged on the outside of the overmoulding (120).

7. Chassis component (112) according to at least one of the preceding claims, **characterized in that** the at least one reinforcing element (122, 124) comprises bidirectionally or multidirectionally arranged continuous fibres.

8. Chassis component (112) according to at least one of the preceding claims, **characterized in that** the at least one reinforcing element (122, 124) comprises an organosheet.

9. Method for producing a chassis component (112) according to at least one of the preceding claims, **characterized in that**, first of all, the core module (110) is produced by joining the at least one first load-conducting element (100, 102) and the at least one load transfer element (114, 116, 118) as well as the at least one load transfer element (114, 116, 118) and the at least one second load-conducting element (104, 106), and then the core module (110) is overmoulded.

10. Method according to Claim 9, **characterized in that** the overmoulding (120) and the at least one reinforcing element (122, 124) are then joined.

## Revendications

1. Composant de mécanisme de roulement (112) destiné à un véhicule automobile, le composant de mécanisme de roulement (112) comportant un module central (110), pourvu d'au moins un premier élément de direction de charge (100, 102), d'au moins un deuxième élément de direction de charge (104, 106) et d'au moins un élément de transfert de charge (114, 116, 118) reliant l'au moins un premier élément de direction de charge (100, 102) et l'au moins un deuxième élément de direction de charge (104, 106), et un enrobage (120), **caractérisé en ce que**
au moins un élément de transfert de charge (114, 116) comporte des fibres continues disposées de manière unidirectionnelle et au moins un élément de transfert de charge (118) comporte des fibres continues disposées de manière bidirectionnelle ou multidirectionnelle.

2. Composant de mécanisme de roulement (112) selon la revendication 1, **caractérisé en ce que** l'au moins un élément de transfert de charge (114, 116) comporte une bande de fibres de carbone unidirectionnelles.

3. Composant de mécanisme de roulement (112) selon l'une au moins des revendications précédentes, **caractérisé en ce que** l'au moins un élément de transfert de charge (118) comporte une tôle composite.

4. Elément de mécanisme de roulement selon l'une au moins des revendications précédentes, **caractérisé en ce que** l'au moins un élément de transfert de charge comporte un métal.

5. Elément de mécanisme de roulement (112) selon l'une au moins des revendications précédentes, **caractérisé en ce que** l'enrobage (120) comporte une matière synthétique chargée de fibres avec une proportion minimale prédéterminée de matériau de recyclage.

6. Composant de mécanisme de roulement (112) selon l'une au moins des revendications précédentes, **caractérisé en ce que** le composant de mécanisme de roulement (112) comporte au moins un élément de raidissement (122, 124) disposé du côté extérieur de l'enrobage (120).

7. Elément de mécanisme de roulement (112) selon l'une au moins des revendications précédentes, **caractérisé en ce que** l'au moins un élément de raidissement (122, 124) comporte des fibres continues disposées de manière bidirectionnelle ou multidirectionnelle.

8. Elément de mécanisme de roulement (112) selon l'une au moins des revendications précédentes, **caractérisé en ce que** l'au moins un élément raidisseur (122, 124) comporte une tôle composite.

9. Procédé de fabrication d'un composant de mécanisme de roulement (112) selon l'une au moins des revendications précédentes, **caractérisé en ce que** tout d'abord le module central (110) est réalisé par assemblage de l'au moins un premier élément de transfert de charge (100, 102) et de l'au moins un élément de transfert de charge (114, 116, 118) ainsi que de l'au moins un élément de transfert de charge (114, 116, 118) et de l'au moins un deuxième élément de direction de charge (104, 106) et ensuite le module central (110) est enrobé.

10. Procédé selon la revendication 9, **caractérisé en ce que** l'enrobage (120) et l'au moins un élément de raidissement (122, 124) sont ensuite assemblés.
